**Europäisches Patentamt**

**European Patent Office**

**Office européen des brevets**

(19)

(11) Numéro de publication : **0 520 895 A1**

(12) # DEMANDE DE BREVET EUROPEEN

(21) Numéro de dépôt : **92401796.5**

(22) Date de dépôt : **25.06.92**

(51) Int. Cl.⁵ : **B67C 7/00,** B65G 47/84

(30) Priorité : **25.06.91 FR 9107795**

(43) Date de publication de la demande :
**30.12.92 Bulletin 92/53**

(84) Etats contractants désignés :
**DE ES FR GB IT**

(71) Demandeur : **ETABLISSEMENTS LARRIEU-BEDIN Société Anonyme**
**17 rue Mondon**
**F-33491 Le Bouscat (FR)**

(72) Inventeur : **Bedin Jean**
**Château Isard**
**F-33360 Camblanes (FR)**

(74) Mandataire : **Bloch, Gérard**
**2, square de l'Avenue du Bois**
**F-75116 Paris (FR)**

(54) **Machines de traitement des bouteilles.**

(57) L'invention a pour objet un mécanisme associé à une machine de traitement de bouteilles, notamment de remplissage, bouchage, capsulage, étiquetage, dans laquelle les bouteilles amenées par un transporteur sont présélectionnées puis sélectionnées par une roue ou croix à alvéoles qui les place sur ou les avacue de la chaîne de traitement, des moyens fixes assurant la guidage des bouteilles au contact de ladite croix, mécanisme dans lequel la prise des bouteilles est effectuée par leur goulot.

Il comporte une courroie sans fin (9) passant sur des poulies de guidage (8,8', 8″, 8‴) de façon à permettre à la courroie de suivre la zone périphérique de la croix (1,2) parcourue par les bouteilles, des moyens de rappel élastiques (11) agencés pour assurer la tension de la courroie, des moyens de réglage en hauteur (16, 17, 18) de ladite croix (1,2) pour les adapter au niveau de goulot des bouteilles (15, 16, 17, 18) et des moyens de réglage en hauteur des poulies de guidage de la courroie.

EP 0 520 895 A1

## FIG.2

La présente invention concerne les machines de traitement des bouteilles, notamment de remplissage, bouchage, capsulage, étiquetage, dans lesquelles les bouteilles amenées ou évacuées par un transporteur sont présélectionnées puis sélectionnées par une roue ou croix à alvéoles, qui les place sur ou les évacue de la chaîne de traitement, des moyens fixes assurant le guidage des bouteilles au contact de ladite croix, les alvéoles de la croix et le guidage étant adaptés aux formes du corps des bouteilles.

L'adaptation de la machine à des bouteilles de formats différents s'effectue actuellement en échangeant les croix et les moyens de guidage, ce qui entraîne des démontages et un stock d'outillage donc une perte de temps et de place.

L'invention vise précisément à éviter ces pertes grâce à un mécanisme dans lequel la prise des bouteilles est effectuée par leur goulot dont les diamètres, contrairement au corps, diffèrent peu d'un type de bouteille à un autre, et qui est caractérisé par le fait qu'il comporte au moins une courroie sans fin passant sur des poulies de guidage disposées de façon à lui permettre de suivre la zone périphérique de ladite croix suivie par les bouteilles, des moyens de rappel élastiques agencés pour assurer la tension de la courroie, des moyens de réglage en hauteur de ladite croix pour l'adapter au niveau des goulots des bouteilles et des moyens de réglage en hauteur des poulies de guidage de la courroie.

On voit que le mécanisme de l'invention est très simple et évite tout changement des pièces ou outillages quel que soit le format des bouteilles.

Dans bien des cas, la machine de traitement comporte une croix d'entrée qui sélectionne les bouteilles à traiter et une croix de sortie qui évacue les bouteilles traitées.

Dans ces cas, il est avantageux que ce soit une courroie sans fin unique qui coopère avec les croix d'entrée et de sortie et que les poulies de guidage soient portées par un plateau commun.

Il est avantageux aussi de prévoir alors un moyen de réglage en hauteur commun pour les deux croix et le plateau porteur des poulies de guidage de la courroie. A cet effet on peut rendre ledit plateau et les croix solidaires en hauteur d'un arbre coulissant réglable en hauteur, par exemple par une vis commune.

A titre nullement limitatif, on a représenté au dessin annexé un exemple de réalisation d'un mécanisme selon l'invention, dessin sur lequel :

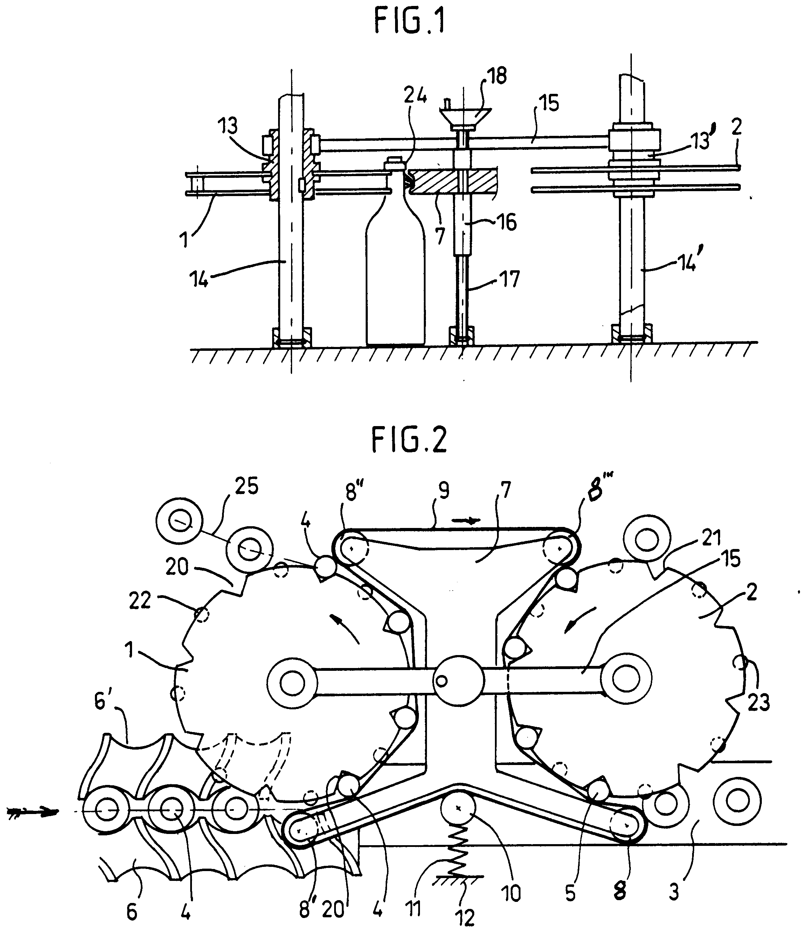

- la figure 1 est une vue simplifiée en coupe partielle, et
- la figure 2 est une vue de dessus du mécanisme.

Dans cet exemple sont représentées les croix d'entrée 1 et de sortie 2, le transporteur 3 d'ammenée des bouteilles non traitées 4 et d'évacuation des bouteilles traitées 5. Avant d'être prises sur la croix d'entrée 1, les bouteilles 4 sont sélectionnées par deux vis opposées 6,6'. Un plateau horizontal 7 porte quatre poulies de guidage 8,8', 8″, 8‴ sur lesquelles passe une courroie trapèzoïdale sans fin 9 dont la tension est controlée par un galet 10 soumis à l'action d'un ressort 11 lié au bâti 12 du mécanisme.

Les croix 1 et 2 sont portées par des manchons respectifs 13, 13' montés coulissants sur des arbres verticaux 14, 14' et solidaires d'un bras commun 15 porté par une douille 16 montée coulissante sur une vis 17 commandée par le volant 18. Le plateau 7 est monté également solidaire de la douille 16.

Les deux croix ont une périphérie délimitant des alvéoles 20 ,21 en forme de V et, entre ces alvéoles sont prévus des petits galets 22, 23.

Le fonctionnement du mécanisme décrit résulte immédiatement de ce qui précède.

Les bouteilles 4 amenées par les vis de sélection 6,6' sont prises par les goulots entre le vé 20 et la courroie 9 qui, tendue sous l'action du ressort 11, est entraînée par les croix 1, 2, et va coincer le goulot de la bouteille dans un vé 20 de la croix 1 jusqu'à ce que la bouteille arrive sur la chaîne de traitement 25. La courroie 9 s'appuie sur les galets à gorge 22, 23.

Après traitement, les bouteilles sont prises par la croix de sortie de la même manière que par la croix d'entrée, pour les déposer sur le convoyeur d'évacuation 3.

Le réglage en hauteur des deux croix 1, 2 et de la courroie 9 s'opère simplement par rotation du volant 18, pour les adapter aussi aux différentes hauteurs de bouteilles pour qu'elles soient saisies par les goulots sans avoir à tenir compte aussi des corps de bouteilles.

## Revendications

1. Mécanisme associé à une machine de traitement de bouteilles, notamment de remplissage, bouchage, capsulage, étiquetage, dans laquelle les bouteilles amenées ou évacuées par un transporteur sont présélectionnées puis sélectionnées par une roue ou croix à alvéoles, qui les place sur ou les évacue de la chaîne de traitement, des moyens fixes assurant le guidage des bouteilles au contact de ladite croix, mécanisme dans lequel la prise des bouteilles est effectuée par leur goulot et qui est caractérisé par le fait qu'il comporte au moins une courroie sans fin (9) passant sur des poulies de guidage (8,8', 8″, 8‴) disposées de façon à lui permettre de suivre la zone périphérique de ladite croix (1,2) parcourue par les bouteilles, des moyens de rappel élastiques (11) agencés pour assurer la tension de la courroie, des moyens de réglage en hauteur (16, 17, 18) de ladite croix pour l'adapter au niveau de goulot des bouteilles (15, 16, 17, 18) et des moyens de réglage en hauteur des poulies de guidage de la courroie.

2. Mécanisme selon la revendication 1, associé à une machine de traitement qui comporte une croix d'entrée sélectionnant les bouteilles à traiter et une croix de sortie qui évacue les bouteilles traitées et dans lequel c'est une courroie sans fin unique qui coopère avec les croix d'entrée et de sortie et les poulies de guidage sont portés par un plateau (7) commun.

3. Mécanisme selon la revendication 2, dans lequel c'est un moyen commun qui assure le réglage en hauteur des deux croix et du plateau porteur des poulies de guidage de la courroie.

4. Mécanisme selon la revendication 3, dans lequel ledit plateau commun et les croix d'entrée et de sortie sont solidaires en hauteur d'un arbre coulissant réglable en hauteur.

## FIG.1

## FIG.2

Office européen
des brevets

**RAPPORT DE RECHERCHE EUROPEENNE**

Numero de la demande

EP    92 40 1796

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 256 550 (SEITZ ENZINGER NOLL MASCHINENBAU) | 1,2 | B67C7/00 B65G47/84 |
| A | * le document en entier * | 3,4 | |
| X | PATENT ABSTRACTS OF JAPAN vol. 10, no. 231 (M-506)(2287) 12 Août 1986 & JP-A-61 064 624 ( TOYAMA SANKI K. K. ) 3 Avril 1986 | 1 | |
| A | * le document en entier * * abrégé * | 3 | |
| A | US-A-3 018 006 (E. Z. ZILAHY) * colonne 3, ligne 3 - ligne 34; figures * | 1 | |
| A | DE-B-1 283 112 (R. PAGAY) * le document en entier * | 2-4 | |

DOMAINES TECHNIQUES RECHERCHES (Int. Cl.5)

B67C
B67B
B65G

Le présent rapport a été établi pour toutes les revendications

| Lieu de la recherche | Date d'achèvement de la recherche | Examinateur |
|---|---|---|
| LA HAYE | 02 OCTOBRE 1992 | VAN ROLLEGHEM F. |

EPO FORM 1503 03.82 (P0402)